# EUROPEAN PATENT SPECIFICATION

(11) **EP 3 378 312 B1**
(45) Date of publication and mention of the grant of the patent: **02.03.2022**
(21) Application number: 18163069.0
(22) Date of filing: 21.03.2018
(51) Int. Cl.: A01N 31/02, A01N 37/06, A01N 25/34, A01P 19/00

(54) **SUSTAINED RELEASE PHEROMONE PREPARATION**
PHEROMONPRÄPARAT MIT VERZÖGERTER FREISETZUNG
PRÉPARATION DE PHÉROMONE À LIBÉRATION PROLONGÉE

(30) Priority: 24.03.2017 JP 2017059444
(43) Date of publication of application: 26.09.2018
(73) Proprietor: Shin-Etsu Chemical Co., Ltd., Tokyo 100-0004 (JP)
(72) Inventor: SAGUCHI, Ryuichi, Niigata, Niigata 942-8601 (JP); KINSHO, Takeshi, Niigata, Niigata 942-8601 (JP); OHNO, Erina, Niigata, Niigata 942-8601 (JP)
(74) Representative: De Vries & Metman

(56) References cited:
- WO-A1-2015/128428
- JP-A- 2012 250 957
- US-A- 5 993 843
- US-A1- 2008 187 597
- US-A1- 2014 308 328
- JAN J DE VLIEGER: "Development of a sprayable slow-release formulation for the sex pheromone of the Mediterranean Corn Borer, Sesamia nonagroides", THE ENVIRONMENTALIST, KLUWER ACADEMIC PUBLISHERS, BO, vol. 28, no. 1, 6 July 2007 (2007-07-06), pages 45-48, XP019572459, ISSN: 1573-2991

## Description

### BACKGROUND OF THE INVENTION

### 1. Field of the Invention

The invention relates to a sustained release pheromone preparation for controlling a pest insect which comprises, at a constant ratio as sex pheromone components, an unsaturated aliphatic acetate compound and an unsaturated aliphatic alcohol compound having a structure in which the acetyl group of the unsaturated aliphatic acetate compound is replaced with a hydrogen atom, wherein the preparation comprises the unsaturated aliphatic acetate compound and the unsaturated aliphatic alcohol compound.

### 2. Related Art

Control of a pest insect by mating disruption is achieved by releasing the synthetic pheromone of a pest insect to be controlled into the air so that mating between males and females will be disrupted to reduce their copulation index, thereby suppressing the birth of the next generation. A preparation for releasing this synthetic pheromone is required to release the sex pheromone stably during an emergence period (for from 2 to 6 months) of the pest insect.

A sex pheromone of a pest insect is species-specific. Accordingly, when a pest insect has a natural composition containing, at a certain ratio as sex pheromone components, an unsaturated aliphatic acetate compound and an unsaturated aliphatic alcohol compound having a structure in which the acetyl group of the unsaturated aliphatic acetate compound is replaced with a hydrogen atom, it is necessary to release the unsaturated aliphatic acetate compound and the unsaturated aliphatic alcohol compound at the same ratio as that of the natural composition in order to disrupt the mating (J. Eco. Ent., 93(3), 820-827(2000)).

Various types of sustained release preparations have been developed for controlling the release rate of a synthetic pheromone.

JP 2010-047564A proposes a mating disruptant against a pest insect not substantially containing an alcohol compound but containing one or more acetate compounds as a natural pheromone. The mating disruptant comprises a polyolefin type container, and the acetate compound and an alcohol compound corresponding to the acetate compound (i.e. an alcohol compound having a structure where the acetyl group of the acetate compound is replaced with a hydrogen atom) in the container.

US2014/308328 describes a sustained release preparation including a polymer tube having a sharp end and an insect pest-targeting gel composition in the polymer tube, the composition including one or more volatile substances and an oil gelling agent.

US5993843 describes a a biodegradable sustained-release preparation which comprises a mixture of 99 to 10 parts by weight of an aliphatic polyester and 1 to 90 parts by weight of a modifier for the regulation of sustained releasability of an active ingredient.

US2008187597 describes a sustained release preparation comprising a tubular container comprising two layers of outer and inner layers, the inner layer having a thickness of 0.12 to 1.2 mm and having a foamed structure permitting the soaking-up of a liquid chemical to a height of at least 25 mm by capillarity.

JP2012-250957 describes a biodegradable pheromone dispenser including a liquid phase made of a pheromone liquid; and a vessel provided with a resin film dividing the liquid phase and the outside, wherein the resin has a specific composition and a liquid absorbing sheet is adhered at least to a part of the face in contact with the liquid phase of the resin film.

WO2015128428 describes a dispenser for pheromones which is made of plastic material selected from among blends of at least one partially aromatic copolyester and at least one polymerized lactic acid and mixtures of said blends and one or more fillers.

J.J. de Vlieger, Environmentalist 2008, 28: 45-48, describes the development of a sprayable slow-release formulation for the sex pheromone of *Sesamia nonagroides*, which sprayable slow-release formulation comprises microparticles with a size of the order of 100 micron contsisting of an intimate mixture of sex pheromone and polymer.

### SUMMARY OF THE INVENTION

Polyolefin is often used as a sex pheromone-permeable membrane of a container of a sustained release pheromone preparation in consideration of its stability against the sex pheromone and processability. However, a permeation rate through a polyolefin membrane differs largely between an unsaturated aliphatic acetate compound and an unsaturated aliphatic alcohol compound. For example, the Detailed Description of the Invention and Examples in JP 2010-047564A include examples in which a mixture of 100 parts by weight of an acetate compound and 0.5 to 10 parts by weight of an alcohol compound corresponding to the acetate compound is enclosed in a polyethylene container or the like, and then sustainedly released. In this case, however, the acetate compound and the alcohol compound differ in affinity for the polyethylene so that the respective membrane permeation rates differ largely. More specifically, the affinity of the alcohol compound with the polyolefin is markedly low compared with that of the acetate compound with the polyolefin so that the membrane permeation rate of the alcohol component becomes markedly smaller than that of the acetate component. This means that the alcohol concentration in the mixture remaining in the container increases gradually with the progress of the release. Although the acetate compound and the alcohol compound, which are enclosed in the container, have a limited mixing ratio in JP 2010-047564A, a release ratio of the acetate compound and the alcohol compound always varies throughout the effective action period of the preparation, differing from the component ratio at the time when they are enclosed in the container.

To effectively control a pest insect by using a highly species-specific sex pheromone, it is important to keep a field pheromone concentration at the same component ratio as that of the sex pheromone of the target pest insect throughout an emergence period of the pest insect. There is therefore a demand for providing an effective sustained release preparation.

The inventors have carried out an extensive investigation with a view to achieving the above-described object. As a result, it has been found that a mixture, at a predetermined ratio, of an unsaturated aliphatic acetate compound and an unsaturated aliphatic alcohol compound having a structure obtained by substituting the acetyl group of the unsaturated aliphatic acetate compound with a hydrogen atom, is enclosed in a container comprising, as at least a part thereof, a membrane of a polyester, or a polyester copolymer corresponding to Formula (I) below, or a polymer blend of the polyester or the copolymer with a biodegradable polyester to obtain a sustained release pheromone preparation, wherein each of the residual weight percentage of the remaining unsaturated aliphatic acetate compound and the residual weight percentage of the remaining unsaturated aliphatic alcohol compound is almost same as the residual weight percentage of the total of these remaining two components throughout an effective action period of the sustained release pheromone preparation, leading to the completion of the invention. The residual weight percentage means the percentage corresponding to the ratio of the remaining weight to the initial weight of the compound.

In one aspect of the invention there is provided a sustained release pheromone preparation for controlling a pest insect comprising a solution of the sex pheromone thereof consisting of a mixture of an unsaturated aliphatic alcohol compound and its acetate compound, the unsaturated aliphatic acetate compound and the unsaturated aliphatic alcohol compound in a weight ratio of from 10:90 to 99.5:0.5, and
a container for enclosing the mixture solution, the container comprising, as at least a part of the container, a membrane of a polyester corresponding to Formula (I) or a polyester copolymer corresponding to formula (I): 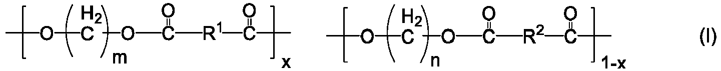 wherein R¹ and R² may be the same or different and each stands for a divalent hydrocarbon group having from 1 to 20 carbon atoms, m is an integer of 4 or more, n is 2 or 3, and x is the number of from 0.6 to 1.0,
or a polymer blend of the polyester or the copolymer with a biodegradable polyester, in which blend the biodegradable polyester is present in an amount of up to 40 parts by weight relative to 100 parts by weight of the polyester or copolymer,
wherein the preparation has a property that a ratio of a residual weight percentage of the remaining unsaturated aliphatic acetate compound to a residual weight percentage of a total of the remaining unsaturated aliphatic acetate and unsaturated aliphatic alcohol
compounds, and a ratio of a residual weight percentage of the remaining unsaturated aliphatic alcohol compound to the residual weight percentage of the total of the remaining unsaturated aliphatic acetate and unsaturated aliphatic alcohol compounds fall each within a range of from 0.80 to 1.20, throughout an effective action period of the sustained release pheromone preparation,
wherein the biodegradable polyester is selected from the group consisting of polycaprolactone, poly(3-hydroxybutyric acid), poly(3-hydroxyvaleric acid), poly(3-hydroxycaproic acid), and copolymers thereof,
wherein the residual weight percentage means the percentage into which the ratio of the remaining weight to the initial weight is converted, and the effective action period means the period during which the residual weight percentage changes from 90% to 40%.

According to the invention, a sustained release pheromone preparation comprising a mixture solution of an unsaturated aliphatic alcohol compound and its acetate compound, can keep a ratio between the acetate compound and the alcohol compound in the mixture solution constant throughout an effective action period of the sustained release pheromone preparation.

### BRIEF DESCRIPTION OF THE DRAWINGS

FIG. 1 shows the results of a time-dependent change in a weight percentage of remaining Z-8-dodecenyl acetate, a weight percentage of remaining Z-8-dodecenol, and a weight percentage of a total of these remaining two components in Example 1;
FIG. 2 shows the results of a time-dependent change in a weight percentage of remaining Z-8-dodecenyl acetate, a weight percentage of remaining Z-8-dodecenol, and a weight percentage of a total of these remaining two components in Comparative Example 1;

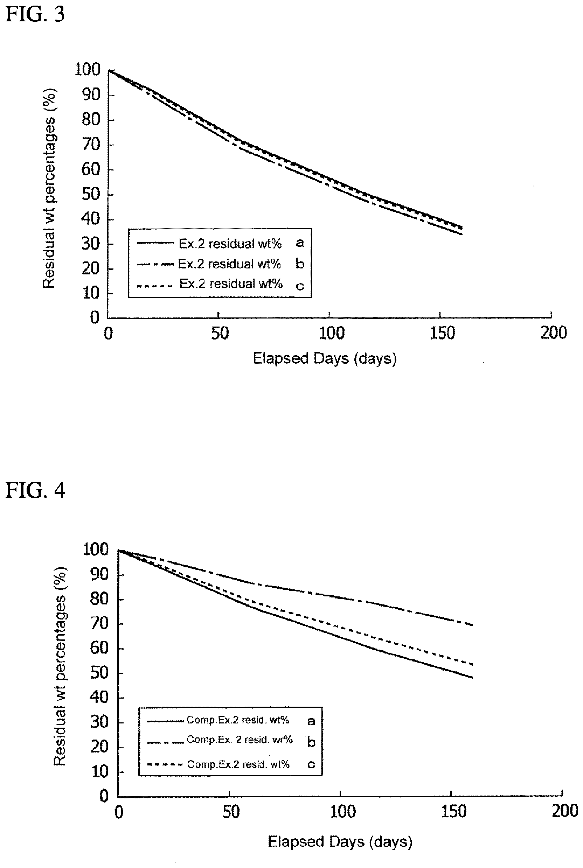

FIG. 3 shows the results of a time-dependent change in a weight percentage of remaining Z-11-hexadecenyl acetate, a weight percentage of remaining Z-11-hexadecenol, and a weight percentage of a total of these remaining two components in Example 2;
FIG. 4 shows the results of a time-dependent change in a weight percentage of remaining Z-11-hexadecenyl acetate, a weight percentage of remaining Z-11-hexadecenol, and a weight percentage of a total of these remaining wo components in Comparative Example 2;

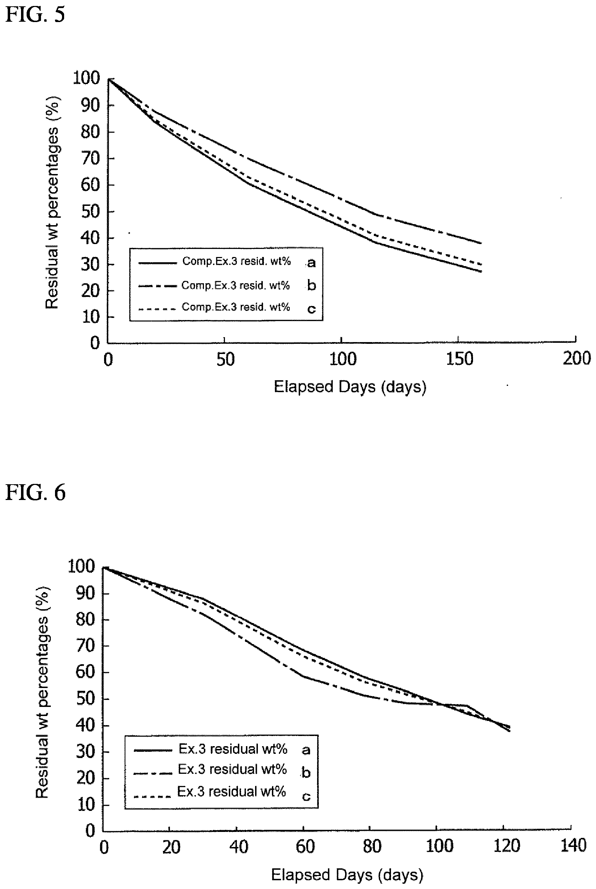

FIG. 5 shows the results of a time-dependent change in a weight percentage of remaining Z-11-hexadecenyl acetate, a weight percentage of remaining Z-11-hexadecenol, and a weight percentage of a total of these remaining two components in Comparative Example 3; and
FIG. 6 shows the results of a time-dependent change in a weight percentage of remaining Z-11-hexadecenyl acetate, a weight percentage of remaining Z-11-hexadecenol, and a weight percentage of a total of these remaining two components in Example 3;

### DETAILED DESCRIPTION OF THE PREFERRED EMBODIMENTS

Various attempts have conventionally been made for controlling the release rate of a volatile substance such as a pheromone substance with the passage of time. For example, a pheromone substance enclosed in a polymer tube or a polymer ampule, or wrapped with a sheet or a polymer film, has been put into practical use as a sustained release pheromone preparation for control of a pest insect.

Examples of the polymers previously used for a sustained release pheromone preparation include a thermoplastic resin such as a polyolefin (e.g., polyethylene), polyvinyl chloride, polystyrene, polyvinyl acetate, polyurethane, an acrylic resin, an ABS resin, and copolymers thereof. In recent years, there has been a strong demand for reducing an environmental burden further so that a polymer to be used for a sustained release pheromone preparation is strongly required to have natural degradability and biodegradability.

An aliphatic polyester is known as a polymer having biodegradability. Examples of the aliphatic polyester include a polyester in which structural units, that is, a dicarboxylic acid and a diol have been condensed with each other (which will hereinafter also be called "Polyester A") and a polyester in which structural units, that is, hydroxycarboxylic acids have been condensed with each other (which will hereinafter also be called "Polyester B").

Examples of the dicarboxylic acid as a structural unit of the Polyester A include malonic acid, succinic acid, glutaric acid, adipic acid, sebacic acid and fumaric acid, and examples of the diol include ethylene glycol, propylene glycol, butanediol, pentanediol, hexanediol, octanediol and decanediol.

Examples of the hydroxycarboxylic acid as a structural unit of the Polyester B include lactic acid, hydroxyvaleric acid, hydroxycapric acid, hydroxypropionic acid (in this case, the polyester may be prepared not by condensation polymerization but ring opening polymerization using propiolactone as a monomer), hydroxycaproic acid (in this case, the polyester may be prepared not by condensation polymerization but ring opening polymerization using caprolactone as a monomer).

These aliphatic polyesters are conventionally added to attain biodegradability. When a mixture solution of an unsaturated aliphatic alcohol compound and its acetate compound, is enclosed in a container and used as a sustained release pheromone preparation, the relationship was investigated between a release period and a ratio of them enclosed in the container.

As an aliphatic polyester having biodegradability, the Polyester B having a hydroxycarboxylic acid structural unit and a condensed structure was investigated. As a result, it has been found that the Polyester B having lactic acid, hydroxyvaleric acid, hydroxycaproic acid or hydroxycapric acid as a structural unit, shows low affinity for the unsaturated aliphatic acetate compound and therefore has a small permeation rate, and that it hardly has affinity for the alcohol compound and therefore a polyester composed only of this structural unit cannot be used as the sustained release preparation.

On the other hand, as the Polyester A in which dicarboxylic acid and diol structural units have been condensed with each other, various polyesters are investigated, including the polyester having, as the dicarboxylic acid structural unit, malonic acid, succinic acid, glutaric acid, adipic acid, sebacic acid or fumaric acid, and, as the diol structural unit, ethylene glycol, propylene glycol, butanediol, pentanediol, hexanediol, octanediol or decanediol. As a result, it has been found unexpectedly that there is a group of aliphatic polyesters having a specific structure and allowing a mixing ratio of components enclosed in a container to be constant throughout the release period.

Further investigation has revealed that a sustained release preparation comprising a membrane of the polyester corresponding to Formula (I) below as at least a part of a container of the preparation, and a mixture solution of an unsaturated aliphatic alcohol compound and its acetate compound, can keep a component ratio in the mixture solution remaining in the sustained release preparation constant throughout the release period.

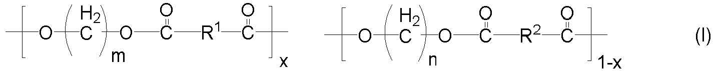

In Formula (I), R¹ and R² may be the same or different and each stands for a divalent hydrocarbon group having from 1 to 20 carbon atoms, m is an integer of 4 or more, n is 2 or 3, and x stands for a mole fraction and is the number of from 0.6 to 1.0. The structural unit having the mole fraction x may be of a single kind or two or more kinds such as a structural unit of a copolymer of butylene adipate (i.e. m is 4 and R¹ means butylene) and butylene succinate (i.e. m is 4 and R¹ means ethylene). Also the structural unit having the mole fraction (1-x) may be a single kind or two or more kinds.

In Formula (I), m and n, each of which is the number of repetition of methylene units, are different from each other. It has been found that since m and n are different, the respective percentages of the remaining unsaturated aliphatic alcohol compound and its acetate compound, change almost identically to the percentage of the total of these remaining two compounds.

When the Polyester A is a condensation polymer having succinic acid (i.e. R¹ and R² each means -(CH₂)₂- in Formula (I)) as the dicarboxylic acid structural unit and ethylene glycol (i.e. both of m and n are 2 in Formula (I)) as the diol structural unit, due to a difference in affinity between the unsaturated aliphatic acetate compound and the unsaturated aliphatic alcohol compound, only the unsaturated aliphatic acetate compound is released in a large amount.

When the Polyester A is a condensation polymer having adipic acid (R¹ and R² each means -(CH₂)₄- in Formula (I)) as the dicarboxylic acid structural unit and butane diol (both of m and n are 4 in Formula (I)) as the diol structural unit, the component ratio between the unsaturated aliphatic acetate compound and the unsaturated aliphatic alcohol compound, both which are enclosed in the container, changes at a certain ratio throughout the release period.

When the Polyester A is a condensation polymer having adipic acid (R¹ and R² each means -(CH₂)₄- in Formula (I)) as the dicarboxylic acid structural unit and ethylene glycol (both m and n are 2 in Formula (I)) as the diol structural unit, only the acetate compound is released in a large amount.

As a result of the above investigation and the other analogous investigation, it has been found that the preparation exhibits the intended characteristics when m and n are different from each other, more specifically, m is an integer of 4 or more and n is 2 or 3 in Formula (I).

In Formula (I), R¹ and R² each means a divalent hydrocarbon group having from 1 to 20 carbon atoms, preferably from 2 to 12 carbon atoms, more preferably from 2 to 10 carbon atoms. R¹ and R² may be the same or different. Examples of the divalent hydrocarbon group having from 1 to 20 carbon atoms include divalent hydrocarbon groups obtained by removal of any two hydrogen atoms from a hydrocarbon compound having a linear, branched, cyclic or polycyclic carbon skeleton.

Specific examples of the C₁₋₂₀ hydrocarbon compound having a linear, branched, cyclic or polycyclic carbon skeleton include linear, branched, cyclic or polycyclic saturated or unsaturated hydrocarbon compounds such as methane, ethane, propane, butane, isobutane, pentane, isopentane, neopentane, hexane, isohexane, methylhexane, heptane, isoheptane, methylheptane, octane, nonane, decane, undecane, dodecane, cyclopropane, cyclobutane, cyclopentane, cyclohexane, cycloheptane, cyclooctane, bicyclo[2.2.1]heptane, bicyclo[2.2.2]octane, bicyclo[3.3.0]octane, bicyclo[4.3.0]nonane, adamantane, spiro[3.4]octane, spiro[4.5]decane, benzene, toluene, xylene, cumene, naphthalene, anthracene, biphenyl, terphenyl, dicylopentyl, dicyclopentylidene, hexylidene, diphenylmethane, diphenylethane, and diphenylpropane; and unsaturated hydrocarbon compounds obtained by substituting at least one of saturated carbon-carbon single bond (C-C) in the above-exemplified hydrocarbon compound with a carbon-carbon double bond (C=C) or a carbon-carbon triple bond (C≡C). At least one of hydrogen atom of these hydrocarbon compounds may be substituted with an alkyl group such as methyl, ethyl, butyl, isobutyl, sec-butyl or tert-butyl; an aryl group such as phenyl, tolyl or xylyl; or an aralkyl group such as benzyl.

Preferable examples of the divalent hydrocarbon group as R¹ or R² include a 1,2-ethylene group (-(CH₂)₂-), a trimethylene group (1,3-propylene group, -(CH₂)₃-), a tetramethylene group (1,4-butylene group, -(CH₂)₄-), a pentamethylene group (1,5-pentylene group, -(CH₂)₅-), a hexamethylene group (1,6-hexylene group, -(CH₂)₆-), a methylethylene group (propylene group, -CH₂-CH(CH₃)-), a 2-methyltrimethylene group (2-methyl-1,3-propylene group), a 2,2-dimethyltrimethylene group (2,2-dimethyl-1,3-propylene group), a cyclohexane-1,2-diyl group, a cyclohexane-1,3-diyl group, a cyclohexane-1,4-diyl group, a 1,2-phenylene group (o-phenylene group), a 1,3-phenylene group (m-phenylene group), a 1,4-phenylene group (p-phenylene group), a 1,2-naphthylene group, a 1,4-naphthylene group, a 2,6-naphthylene group, a 1,4-dimethylbenzene-7,8-diyl group, a bicyclo[2.2.1]heptane-2,3-diyl group, a tricyclo[5.2.1.0^{2.6}]decane-8,9-diyl group, a tetracyclo[4.4.0.1^{2.5}.1^{7.10}]dodecane-3,4-diyl group, a 2,2-diphenylpropane-4',4"-diyl group, and an adamantane-1,3-diyl group. The R¹ and R² is appropriately selected in consideration of various properties of the intended sustained release preparation.

The membrane which is at least a part of the container of the sustained release pheromone preparation may be formed using only the polyester of Formula (I) or a copolymer of the polyester of Formula (I). It may also be formed using a polymer blend of the polyester of Formula (I) with a biodegradable polyester, or a polymer blend of a copolymer of the polyester of Formula (I) with a biodegradable polyester.

The polyester having the mole fraction (i.e. composition ratio of the structural unit) x of 1 in Formula (I) is not particularly limited, and may be a random copolymer, an alternate copolymer, a block copolymer, or a graft copolymer. Examples thereof include polybutylene succinate; a copolymer of butylene adipate and butylene succinate at a mole ratio of preferably from 10:90 to 95:5, more preferably from 20:80 to 50:50; a copolymer of butylene adipate and butylene terephthalate at a mole ratio of preferably from 97:3 to 50:50, more preferably from 95:5 to 70:30; a copolymer of butylene succinate and butylene terephthalate; and a terpolymer of butylene succinate, butylene adipate and butylene terephthalate.

The copolymer of the polyester of Formula (I) is not particularly limited, and may be a random copolymer, an alternate copolymer, a block copolymer or a graft copolymer. The mole fraction (i.e. composition ratio of the structural unit) x in Formula (I) with respect to the copolymer is the number of from 0.6 to 1.0, preferably of from 0.6 to 0.95, more preferably of from 0.7 to 0.95. The copolymer is, for example, a copolymer of butylene adipate and ethylene adipate at a mole ratio of preferably from 95:5 to 55:45, more preferably from 90:10 to 60:40.

The biodegradable polyester to be used for the polymer blend include condensation polymers or ring-opening polymers of ε-caprolactone, lactic acid, 3-hydroxybutyric acid, 3-hydroxyvaleric acid or 3-hydroxycaproic acid, and copolymers thereof.

An amount of the biodegradable polyester to be blended is up to 40 parts, preferably from 5 to 40 parts by weight relative to 100 parts by weight of the polyester of Formula (I) or a copolymer of the polyester from the standpoint of keeping the component ratio constant between the unsaturated aliphatic acetate component and the unsaturated aliphatic alcohol component in the remaining solution.

The sustained release pheromone preparation targets a pest insect comprising, as sex pheromone components, an unsaturated aliphatic alcohol compound and its acetate compound, the unsaturated aliphatic acetate compound and the unsaturated aliphatic alcohol compound in a weight ratio of from 10:90 to 99.5:0.5.

When the weight ratio of the unsaturated aliphatic acetate compound to the unsaturated aliphatic alcohol compound in the mixture solution is less than 10, release of the unsaturated aliphatic acetate compound decreases markedly. When the weight ratio of the unsaturated aliphatic acetate compound to the unsaturated aliphatic alcohol compound in the mixture solution is more than 99.5, release of the unsaturated aliphatic alcohol compound decreases markedly.

The unsaturated aliphatic acetate compound is preferably an acetate ester having at least one double bond or triple bond between carbon atoms and not containing a cyclic structure. Examples include monoenyl acetates having a double bond such as Z3-decenyl acetate, Z4-decenyl acetate, E5-decenyl acetate, Z7-undecenyl acetate, Z8-undecenyl acetate, E9-undecenyl acetate, E7-dodecenyl acetate, Z7-dodecenyl acetate, Z8-dodecenyl acetate, E8-dodecenyl acetate, E9-dodecenyl acetate, 11-dodecenyl acetate, Z4-tridecenyl acetate, E6-tridecenyl acetate, E8-tridecenyl acetate, Z8-tridecenyl acetate, Z7-tetradecenyl acetate, E8-tetradecenyl acetate, Z8-tetradecenyl acetate, E9-tetradecenyl acetate, Z9-tetradecenyl acetate, E10-tetradecenyl acetate, Z10-tetradecenyl acetate, E12-tetradecenyl acetate, Z12-tetradecenyl acetate, 12-methyltetradecenyl acetate, Z8-pentadecenyl acetate, E9-pentadecenyl acetate, Z3-hexadecenyl acetate, Z5-hexadecenyl acetate, E6-hexadecenyl acetate, Z7-hexadecenyl acetate, Z9-hexadecenyl acetate, Z10-hexadecenyl acetate, Z12-hexadecenyl acetate, Z11-heptadecenyl acetate, E2-octadecenyl acetate, Z11-octadecenyl acetate and E13-octadecenyl acetate; dienyl acetates having two double bonds such as Z3E5-dodecadienyl acetate, E3Z5-dodecadienyl acetate, E4Z10-dodecadienyl acetate, Z5E7-dodecadienyl acetate, E5Z7-dodecadienyl acetate, E8E10-dodecadienyl acetate, 9,11-dodecadienyl acetate, E4Z7-tridecadienyl acetate, 11-methyl-Z9,12-tridecadienyl acetate, E3E5-tetradecadienyl acetate, E8E10-tetradecadienyl acetate, Z10Z12-tetradecadienyl acetate, Z10E12-tetradecadienyl acetate, E1 0Z12-tetradecadienyl acetate, E10E12-tetradecadienyl acetate, E11,13-tetradecadienyl acetate, Z8Z10-pentadecadienyl acetate, Z8E10-pentadecadienyl acetate, Z8Z10-hexadecadienyl acetate, Z10E12-hexadecadienyl acetate, Z11Z13-hexadecadienyl acetate, Z11E13-hexadecadienyl acetate, E11Z13-hexadecadienyl acetate, Z11E14-hexadecadienyl acetate, E2Z13-octadecadienyl acetate, Z3Z13-octadecadienyl acetate and E3Z13-octadecadienyl acetate; and trienyl acetates having three double bonds such as E3Z8Z11-tetradecatrienyl acetate and E4E6Z10-hexadecatrienyl acetate. These unsaturated aliphatic acetate compounds are often known as some of the sex pheromone components of Lepidoptera pest insects.

The unsaturated aliphatic alcohol compound corresponding to the unsaturated aliphatic acetate compound is an unsaturated aliphatic alcohol compound having a structure where the acetyl group of the unsaturated aliphatic acetate compound is replaced with a hydrogen atom, preferably an alcohol compound having at least one double bond or triple bond between carbon atoms and not containing a cyclic structure.

Examples of the alcohol compounds corresponding to the acetate compound include monoenols having a double bond such as Z3-decenol, Z4-decenol, E5-decenol, Z7-undecenol, Z8-undecenol, E9-undecenol, E7-dodecenol, Z7-dodecenol, Z8-dodecenol, E8-dodecenol, E9-dodecenol, 11-dodecenol, Z4-tridecenol, E6-tridecenol, E8-tridecenol, Z8-tridecenol, Z7-tetradecenol, E8-tetradecenol, Z8-tetradecenol, E9-tetradecenol, Z9-tetradecenol, E10-tetradecenol, Z10-tetradecenol, E12-tetradecenol, Z12-tetradecenol, 12-methyltetradecenol, Z8-pentadecenol, E9-pentadecenol, Z3-hexadecenol, Z5-hexadecenol, E6-hexadecenol, Z7-hexadecenol, Z9-hexadecenol, Z10-hexadecenol, Z12-hexadecenol, Z11-heptadecenol, E2-octadecenol, Z11-octadecenol and E13-octadecenol; dienols having two double bonds such as Z3E5-dodecadienol, E3Z5-dodecadienol, E4Z10-dodecadienol, Z5E7-dodecadieninol, E5Z7-dodecadienol, E8E10-dodecadienol, 9,11-dodecadieninol, E4Z7-tridecadienol, 11-methyl-Z9,12-tridecadienol, E3E5-tetradecadienol, E8E10-tetradecadienol, Z10Z12-tetradecadienol, Z10E12-tetradecadienol, E10Z12-tetradecadienol, E10E12-tetradecadienol, E11,13-tetradecadienol, Z8Z10-pentadecadienol, Z8E10-pentadecadienol, Z8Z10-hexadecadienol, Z10E12-hexadecadienol, Z11Z13-hexadecadienol, Z11E13-hexadecadienol, E11Z13-hexadecadienol, Z11E14-hexadecadienol, E2Z13-octadecadienol, Z3Z13-octadecadienol and E3Z13-octadecadienol; and trienols having three double bonds such as E3Z8Z11-tetradecatrienol and E4E6Z10-hexadecatrienol. These unsaturated aliphatic alcohol compounds are often known as some of the sex pheromone components of Lepidoptera pest insects.

The sustained release pheromone preparation targets a pest insect containing, at a certain ratio as sex pheromone components, the unsaturated aliphatic alcohol compound and its acetate compound.

Examples of a pest insect containing, as sex pheromone components, the unsaturated aliphatic acetate compound and the unsaturated aliphatic alcohol compound having a structure where the acetyl group of the unsaturated aliphatic acetate compound is replaced with a hydrogen atom include the peach twig borer (Anarsia lineatella) containing, as a sex pheromone, a 85:15 (weight ratio) mixture of E5-decenyl acetate and E5-decenol (Roelofs, Environ. Entomol (1975)) wherein it is known that the bioactivity is markedly reduced when either one of the two compounds is missing or the component ratio thereof is different from said ratio. Thus, it can be said that this is the pest insect containing the acetate and the alcohol at a ratio of 85:15. Similarly, there are many kinds of pest insects containing, at a predetermined ratio, the unsaturated aliphatic acetate compound and the unsaturated aliphatic alcohol compound having a structure where the acetyl group of the unsaturated aliphatic acetate compound is replaced with a hydrogen atom. The other examples include mimosa webworm (Homadaula anisocentra) containing, as the sex pheromone, a 50:50 (weight ratio) mixture of E11-tetradecenyl acetate and E11-decenol; stone leek miner (Acrolepia alliella) containing, as the sex pheromone, a 45:45:10 (weight ratio) mixture of Z11-hexadecenal, Z11-hexadecenyl acetate and Z11-hexadecenol; Asiatic common looper (Autographa nigrisigna) containing, as the sex pheromone, a 2:100: 62:4 (weight ratio) mixture of Z5-dodecenyl acetate, Z7-dodecenyl acetate, Z7-dodecenol and Z7-tetradecenyl acetate; Mediterranean flour moth (Ephestia kuehniella) containing, as the sex pheromone, a 5.6:1.2 (weight ratio) mixture of Z9E12-tetradecadienyl acetate and Z9E12-tetradecadienol; oriental fruit moth (Grapholita molesta) containing, as the sex pheromone, a 90:6:4 (weight ratio) mixture of Z8-dodecenyl acetate, E8-dodecenyl acetate and Z8-dodecenol; pink borer (Sesamia inferens) containing, as the sex pheromone, a 75:25 (weight ratio) mixture of Z-11-hexadecenyl acetate and Z-11-hexadecenol; Toleria romanovi containing, as the sex pheromone, a 10:90 (weight ratio) mixture of (Z,Z)-3,13-octadecadienyl acetate and (Z,Z)-3,13-octadecadienol. A sex pheromone is species-specific and reduces bioactivity when one of the components is missing or the component ratio is changed. Accordingly, it is important as the characteristic of the sustained release pheromone preparation to keep the component ratio constant in the remaining solution during the acting period of the preparation.

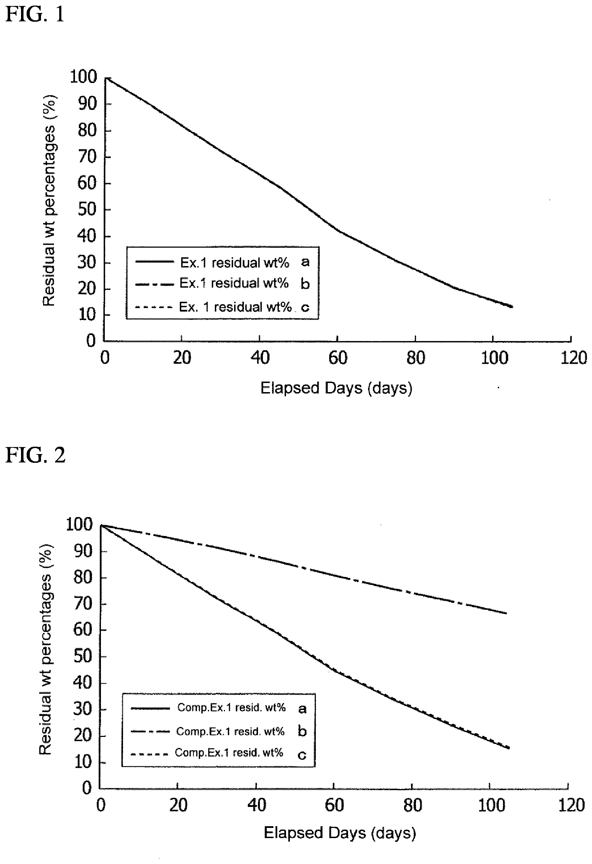

The release characteristic of the sustained release pheromone preparation to keep the component ratio constant in the remaining solution of the preparation, will be described referring to FIGS. 1 and 2 and later to Table 1. FIG. 1 shows an example of time-dependent change of a weight percentage "a" of the remaining acetate compound, a weight percentage "b" of the remaining alcohol compound, and a percentage weight "c" of the total of the remaining acetate and alcohol compounds with respect to the sustained release pheromone preparation containing a 98.9:1.1 (weight ratio) mixture solution of an unsaturated aliphatic acetate compound (Z-8-dodecenyl acetate) and an unsaturated aliphatic alcohol compound (Z-8-dodecenol) having a structure where the acetyl group of the unsaturated aliphatic acetate compound is replaced with a hydrogen atom in a container made of a condensation polymer of at least one dicarboxylic acid and at least one diol, a copolymer of the condensation polymer, or a polymer bend of the condensation polymer or the copolymer and a biodegradable polyester.

FIG. 2 shows an example of a time-dependent change of a residual weight percentage "a" of the remaining acetate compound, a residual weight percentage "b" of the remaining alcohol compound, and a residual weight percentage "c" of the total of the remaining acetate and alcohol compounds with respect to the sustained release pheromone preparation containing a 98.9:1.1 (weight ratio) mixture solution of an unsaturated aliphatic acetate compound (Z-8-dodecenyl acetate) and an unsaturated aliphatic alcohol compound (Z-8-dodecenol) having a structure where the acetyl group of the unsaturated aliphatic acetate compound is replaced with a hydrogen atom in a container made of high-density polyethylene.

As shown in FIG. 1, when the sustained release pheromone preparation comprises a container comprising, as at least a part thereof, a membrane of the polyester corresponding to Formula (I), a copolymer of the polyester, or a polymer blend of the polyester or the copolymer with a biodegradable polyester, the residual weight percentage "a" of the remaining acetate compound, the residual weight percentage "b" of the remaining alcohol compound, and the residual weight percentage "c" of the total of the remaining acetate and alcohol compounds have time-dependent change almost on the same line. On the other hand, as shown in FIG. 2, when the sustained release pheromone preparation comprises a container made of high-density polyethylene, the change of the residual weight percentage "b" of the remaining alcohol component is quite different from the change of the residual weight percentage "c" of the total of the remaining acetate and alcohol compounds. It is shown in Table 1 and FIG. 1 that a "b/c" ratio falls within a range of from 0.99 to 1.03 for from Day 15 to Day 105, while it is shown in Table 1 and FIG. 2 that a "b/c" ratio gradually increases from 1.11 on Day 15 to 4.19 on Day 105. When the sustained release pheromone preparation comprises a container made of high-density polyethylene, a weight ratio between each component in the remaining solution shows a gradual change because the weight ratio of the released alcohol component to the total of the released components is small.

As an index of keeping the component weight ratio constant in the remaining solution contained in the sustained release pheromone preparation, the inventors considers that in ideal release, "a/c" which is a ratio of the residual weight percentage of the remaining acetate component to the residual weight percentage of the total of the remaining two components, and "b/c" which is a ratio of the residual weight percentage of the remaining alcohol component to the residual weight percentage of the total of the remaining two components are simultaneously 1. According to the invention, a ratio (a/c) of the residual weight percentage of the remaining acetate compound to the residual weight percentage of the total of the remaining two components and a ratio (b/c) of the residual weight percentage of the remaining alcohol compound to the residual weight percentage of the total of the remaining two components each falls within a range of from 0.80 to 1.20, preferably from 0.85 to 1.15, more preferably from 0.90 to 1.10 throughout the period of release from the sustained release pheromone preparation. A ratio (a/b) of the residual weight percentage of the remaining acetate compound to the residual weight percentage of the remaining alcohol compound falls within a range of from 0.80 to 1.25, preferably from 0.85 to 1.20, more preferably from 0.95 to 1.15 throughout the period of release from the sustained release pheromone preparation.

FIGS. 1 and 2 show the behavior of the sex pheromone released from the sustained release pheromone preparation at a constant temperature and a constant wind velocity. A sustained release pheromone preparation for pest insect control is used actually in a field and in the presence of a pest insect to be controlled. Thus, the preparation is exposed to variation in temperature and/or wind velocity between day and night or among seasons and is used under varying conditions. The sustained release pheromone preparation is required to keep a release ratio between the sex pheromone components constant similarly to a mixing ratio of the sex pheromone components of the target pest insect, even under such varying conditions. The release performance under predetermined conditions is obviously different from that under the conditions of a field, but the essential performance of the preparation is desirably evaluated under predetermined conditions. Empirically, there is sufficient correlation between release behavior of the preparation evaluated under predetermined conditions and actual release behavior in a field, but first it is necessary to confirm that the intended performance is exhibited under predetermined conditions.

The sustained release pheromone preparation comprises a container comprising, as at least a part of the container, a membrane of the polyester corresponding to Formula (I), a copolymer of the polyester, or a polymer blend of the polyester or the copolymer with a biodegradable polyester. Since such a membrane is present as at least a part of the container, a sex pheromone can permeate through the membrane. The membrane is present as at least a part of the container so that a polymer tube or the like made entirely of such a membrane is also included.

The polymer tube can be obtained by continuous processing such as extrusion. From the standpoint of moldability of the preparation or filling the tube with the sex pheromone, the inner diameter of polymer tube is preferably from 0.4 to 2 mm, more preferably from 0.6 to 1.6 mm. The thickness of the polymer tube is preferably from 0.15 to 1.2 mm, more preferably from 0.25 to 0.8 mm from the standpoint of the moldability of the preparation or a diffusion rate of the sex pheromone. Thus, a long polymer tube is produced.

A sustained release pheromone preparation in another embodiment may be a bag-like preparation obtained by sealing two films at four sides thereof to form a bag and then filling the bag with a pheromone. In this case, the thickness of the film is preferably from 0.15 to 0.6 mm, more preferably from 0.15 to 0.5 mm from the standpoint of the strength or processability of the bag. The bag has each side of preferably from 10 to 150 mm, more preferably from 20 to 100 mm from the standpoint of workability for placing the preparation in a field or from the economic standpoint.

The effective action period of the sustained release pheromone preparation is a period during which a mixture solution being enclosed in the container of the sustained release pheromone preparation and containing an unsaturated aliphatic acetate compound and an unsaturated aliphatic alcohol compound in a weight ratio of from 10:90 to 99.5:0.5 acts on the target pest insect. It does not simply mean the number of months or number of days, but it varies depending on the situation in which the sustained release pheromone preparation is required.

Mating disruption for controlling a pest insect comprises a step of releasing the sex pheromone of the target pest insect into the air to disrupting mating between males and females to reduce their copulation index, thereby suppressing the birth of the next generation. In this case, the sustained release pheromone preparation is required to stably release a sex pheromone component during the emergence period of adult pest insects. In examples of the emergence period of adult pest insects, the emergence of adult pest insects sometimes continues from 2 to 6 months without intermission of emergence of adult pest insects, or although the emergence continues only for about one month, the emergence takes place from 2 to 5 times a year. When emergence of adult pest insects continues for 6 months without intermission, a preparation which can be placed just before emergence of adult insects and effectively work until emergence of adult insects is over 6 months later is considered to be desirable. When adult pest insects emerge three times a year but only for about a month each time, a preparation which can be placed just before first-time emergence of adult pest insects and effectively work until third-time emergence of adult pest insects is over may be used. It is also possible to provide a preparation which can be placed just before first-time emergence of adult pest insects and continuously work until the first-time emergence of the adult insect insects is over. Then the second placement of such a preparation just before second-time emergence, and the third placement of such a preparation just before third-time emergence are carried out. According to the invention, the sustained release pheromone preparation can maintain stable release of a mixture solution contained therein, while keeping a component ratio constant in the mixture solution, during the period when the synthetic sex pheromone components act on a pest insect.

The effective action period of the sustained release pheromone preparation may be, in another expression, a period during which the residual weight percentage of the mixture solution contained in the sustained release pheromone preparation changes ideally from 100% to 0%. This is because it is ideal to release all the amount of the sex pheromone contained in the sustained release pheromone preparation into the air without any waste. However, it is difficult to realize an ideal sustained release pheromone preparation in which the residual weight percentage of the mixture solution changes from 100% to 0%, because the preparation is required to release while keeping the component ratio constant in the mixture solution contained in the sustained release pheromone preparation. Therefore in the current invention the effective action period means the period during which the residual weight percentage changes from 90% to 40%.

### EXAMPLES

The invention will hereinafter be described by Examples and Comparative Examples. It should not be construed that the invention is limited to or by them.

### <Example 1>

A polymer tube was produced by extruding a 20:80 (mole ratio) copolymer of butylene adipate and butylene succinate ("Bionolle #3001", product of Showa Denko) into a long tube having an inner diameter of 1.4 mm and a wall thickness of 0.60 mm, and cutting the long tube into a tube having a length of 200 mm. Then a sustained release pheromone preparation was obtained by filling the resulting polymer tube with 260 mg of a mixture solution containing Z-8-dodecenyl acetate, E-8-dodecenyl acetate and Z-8-dodecenol at a weight ratio of 93:6:1 (sex pheromone composition of oriental fruit moth) and heat-sealing both ends of the polymer tube.

The resulting sustained release pheromone preparation was left to stand at a wind velocity of 0.7 m/sec and 30°C to release the solution from the preparation. With the passage of time, the remaining amounts of Z-8-dodecenyl acetate, E-8-dodecenyl acetate and Z-8-dodecenol in the preparation were analyzed by gas chromatography. The residual weight percentage "a" of the remaining acetate component, the residual weight percentage "b" of the remaining alcohol component, and the residual weight percentage "c" of the total of the remaining two components were determined. Then the ratio of the residual weight percentage of each remaining component to the residual weight percentage of the total of the remaining two components, "a/c" and "b/c", and the ratio of the residual weight percentage of the remaining acetate component to the residual weight percentage of the remaining alcohol component, "a/b" were calculated. The results are shown in Table 1.

It is evident from Table 1 that the ratios "a/c" and "b/c" each falls within a range of from 0.99 to 1.03 and the ratio "a/b" falls within a range of from 0.97 to 1.01 throughout the release period of the sex pheromone components.

### <Comparative Example 1>

The respective residual weight percentages "a" and "b" of the remaining two components, and the respective ratios of them to the residual weight percentage "c" of the total of the remaining two components, "a/c" and "b/c", and the ratio of the residual weight percentage of the remaining acetate component to the residual weight percentage of the remaining alcohol component, "a/b", were calculated in the same manner as in Example 1 except that the butylene adipate/butylene succinate copolymer in Example 1 was replaced by high density polyethylene,. The results are shown in Table 1.

When high density polyethylene is used, the ratio "a/c" falls within a range of from 1.00 to 0.97, but the ratio "b/c" ranges from 1.00 to 4.18. The ratio "a/b" falls within a range of from 1.00 to 0.23. It is evident that the release ratio of the alcohol component is small so that the alcohol component remains in the preparation.

**Table 1**

| Elapsed Days | | Day0 | Day15 | Day30 | Day45 | Day60 | Day75 | Day90 | Day105 |
|---|---|---|---|---|---|---|---|---|---|
| Ex.1 | Z8-12:Ac (mg) (93) | 245.5 | 212.9 | 177.5 | 143.9 | 104.1 | 76.2 | 51.1 | 32.5 |
| | E8-12:Ac (mg) (6) | 15.8 | 13.7 | 11.4 | 9.29 | 6.71 | 4.92 | 3.28 | 2.1 |
| | Z8-12:OH (mg) (1) | 2.64 | 2.29 | 1.91 | 1.55 | 1.12 | 0.82 | 0.54 | 0.36 |
| | total of Z8, E8-12:Ac and Z8-12:OH (mg) | 263.94 | 228.89 | 190.81 | 154.74 | 111.93 | 81.94 | 54.92 | 34.96 |
| | remaining Z8-12:Ac a% | 100 | 86.7 | 72.3 | 58.6 | 42.4 | 31.0 | 20.8 | 13.2 |
| | remainingZ8-12:OH b% | 100 | 86.7 | 72.3 | 58.7 | 42.4 | 31.0 | 20.5 | 13.6 |
| | remaining Z8-12:Ac and Z8-12:OH c% | 100 | 86.7 | 72.3 | 58.6 | 42.4 | 31.0 | 20.8 | 13.2 |
| | a/c | 1.00 | 1.00 | 1.00 | 1.00 | 1.00 | 1.00 | 1.00 | 1.00 |
| | b/c | 1.00 | 1.00 | 1.00 | 1.00 | 1.00 | 1.00 | 0.99 | 1.03 |
| | a/b | 1.00 | 1.00 | 1.00 | 1.00 | 1.00 | 1.00 | 1.01 | 0.97 |
| Comp. Ex.1 | Z8-12:Ac (mg) (93) | 244.6 | 210.4 | 176.6 | 144.8 | 110.0 | 83.8 | 59.6 | 37.6 |
| | E8-12:Ac (mg) (6) | 16.3 | 13.9 | 11.7 | 9.52 | 7.25 | 5.55 | 3.96 | 2.53 |
| | Z8-12:OH (mg) (1) | 2.75 | 2.64 | 2.52 | 2.38 | 2.23 | 2.09 | 1.96 | 1.83 |
| | remaining Z8, E8-12:Ac and 8-12:OH (mg) | 263.65 | 226.94 | 190.82 | 156.70 | 119.48 | 91.44 | 65.52 | 42.55 |
| | remaining Z8-12:Ac a% | 100 | 86.0 | 72.2 | 59.2 | 45.0 | 34.3 | 24.4 | 15.4 |
| | remaining Z8-12:OH b% | 100 | 96.0 | 91.6 | 86.5 | 81.1 | 76.0 | 71.3 | 66.5 |
| | remaining Z8-12:Ac and Z8-12:OH c% | 100 | 86.1 | 72.4 | 59.5 | 45.4 | 34.6 | 24.9 | 15.9 |
| | a/c | 1.00 | 1.00 | 1.00 | 0.99 | 0.99 | 0.99 | 0.98 | 0.97 |
| | b/c | 1.00 | 1.11 | 1.27 | 1.45 | 1.79 | 2.20 | 2.86 | 4.18 |
| | a/b | 1.00 | 0.90 | 0.78 | 0.68 | 0.55 | 0.45 | 0.34 | 0.23 |

| | | | | | | | | | |
|---|---|---|---|---|---|---|---|---|---|
| Z8-12:Ac means Z-8-dodecenyl acetate, E8-12:Ac means E-8-dodecenyl acetate, and Z8-12:OH means Z-8-dodecenol. | | | | | | | | | |

### <Example 2>

A polymer tube was produced by extruding butylene succinate ("Bionolle #1001", product of Showa Denko) into a long tube having an inner diameter of 1.08 mm and a wall thickness of 0.35 mm and cutting the long tube into a 200-mm length tube. A sustained release pheromone preparation was then obtained by filling the resulting polymer tube with 150 mg of a mixture solution containing Z-11-hexadecenyl acetate and Z-11-hexadecenol at a weight ratio of 75:25 (sex pheromone composition of pink borer) and heat-sealing both ends of the polymer tube.

The sustained release pheromone preparation thus obtained was left to stand at a wind velocity of 0.7 m/sec and 30°C to release the solution from the preparation. With the passage of time, the respective remaining amounts of Z-1 1-hexadecenyl acetate and Z-11-hexadecenol in the preparation were analyzed by gas chromatography. The residual weight percentage "a" of the remaining acetate component, the residual weight percentage "b" of the remaining alcohol component, and the residual weight percentage "c" of the total of the remaining two components were determined. Then the ratio of the residual weight percentage of each remaining component to the residual weight percentage of the total of the remaining two components, "a/c" and "b/c", and the ratio of the residual weight percentage of the remaining acetate component to the residual weight percentage of the remaining alcohol component, "a/b", were calculated. The results are shown in Table 2.

### <Comparative Example 2>

The respective residual weight percentages of the remaining two components and the respective ratios of them to the residual weight percentage of the total of the remaining two components were calculated in the same manner as in Example 2 except that butylene succinate in Example 2 was replaced by ethylene succinate. The results are shown in Table 2.

The results of Comparative Example 2 in which n is 2, R¹ and R² each stands for -(CH₂)₂- and x is 0 in Formula (I), the ratio "b/c" changes within a range of from 1.00 to 1.30 and the ratio "a/b" changes within a range of from 1.00 to 0.69, shows that the release ratio of the alcohol component is small.

### <Comparative Example 3>

The respective residual weight percentages of the remaining two components and the respective ratios of them to the residual weight percentage of the total of the remaining two components were calculated in the same manner as in Example 2 except that butylene succinate in Example 2 was replaced by ethylene adipate. The results are shown in Table 2.

The results of Comparative Example 3 in which n is 2, R¹ and R² each stands for -(CH₂)₄- and x is 0 in Formula (I), the ratio "b/c" changes within a range of from 1.00 to 1.27, and the ratio of "a/b" changes within a range of from 1.00 to 0.72, shows that the release ratio of the alcohol component is small.

**Table 2**

| Elapsed Days | | Day0 | Day20 | Day60 | Day115 | Day160 |
|---|---|---|---|---|---|---|
| Ex.2 | Z11-16:Ac (mg) (75) | 119.9 | 110.0 | 86.0 | 60.7 | 44.0 |
| | Z11-16:OH (mg) (25) | 41.2 | 36.9 | 28.3 | 19.6 | 13.9 |
| | total of Z11-16:Ac and Z11-16:OH (mg) | 161.1 | 146.9 | 114.3 | 80.3 | 57.9 |
| | remaining Z11-16:Ac a% | 100 | 91.7 | 71.7 | 50.6 | 36.7 |
| | remaining Z11-16:OH b% | 100 | 89.6 | 68.7 | 47.6 | 33.7 |
| | remaining Z11-16:Ac and Z11-16:OH c% | 100 | 91.2 | 70.9 | 49.8 | 35.9 |
| | a/c | 1.00 | 1.00 | 1.00 | 1.00 | 1.00 |
| | b/c | 1.00 | 0.98 | 0.97 | 0.96 | 0.94 |
| | a/b | 1.00 | 1.02 | 1.03 | 1.04 | 1.06 |
| Com p. Ex.2 | Z11-16:Ac (mg) (75) | 121.8 | 112.7 | 93.5 | 72.8 | 58.5 |
| | Z11-16:OH (mg) (25) | 40.6 | 39.0 | 35.1 | 31.8 | 28.1 |
| | total of Z11-16:Ac and Z11-16:OH (mg) | 162.4 | 151.7 | 128.6 | 104.6 | 86.6 |
| | remaining Z11-16:Ac a% | 100 | 92.5 | 76.8 | 59.8 | 48.0 |
| | remaining Z11-16:OH b% | 100 | 96.1 | 86.5 | 78.3 | 69.2 |
| | total of Z11-16:Ac and Z11-16:OH c% | 100 | 93.4 | 79.2 | 64.4 | 53.3 |
| | a/c | 1.00 | 0.99 | 0.97 | 0.93 | 0.90 |
| | b/c | 1.00 | 1.03 | 1.09 | 1.22 | 1.30 |
| | a/b | 1.00 | 0.96 | 0.88 | 0.76 | 0.69 |
| Com p. Ex.3 | Z11-16:Ac (mg) (75) | 126.8 | 106.2 | 76.6 | 48.2 | 34.2 |
| | Z11-16:OH (mg) (25) | 42.6 | 37.4 | 29.8 | 20.8 | 16.0 |
| | total of Z11-16:Ac and Z11-16:OH (mg) | 169.4 | 143.6 | 106.4 | 69.0 | 50.2 |
| | remaining Z11-16:Ac a% | 100 | 83.7 | 60.4 | 38.0 | 27.0 |
| | remaining Z11-16:OH b% | 100 | 87.8 | 70.0 | 48.8 | 37.6 |
| | remaining Z11-16:Ac and Z11-16:OH c% | 100 | 84.8 | 62.8 | 40.7 | 29.6 |
| | a/c | 1.00 | 0.99 | 0.96 | 0.93 | 0.91 |
| | b/c | 1.00 | 1.04 | 1.11 | 1.20 | 1.27 |
| | a/b | 1.00 | 0.95 | 0.86 | 0.78 | 0.72 |

| | | | | | | |
|---|---|---|---|---|---|---|
| Z11-16:Ac means Z-11-hexadecenyl acetate, and Z11-16:OH means Z-11-hexadecenol. | | | | | | |

### <Example 3>

The sustained release pheromone preparations (100 tubes) obtained in Example 2 were placed in a cane sugar field in Miyako City in Okinawa Prefecture on April 23. Ten tubes were collected on each of installment day (i.e. Day 0), Day 30, Day 60, Day 78, Day 91, Day 109, and Day 122, and the amount of the pheromone remaining in the sustained release pheromone preparation was analyzed by gas chromatography.

Based on the above analysis results, the residual weight percentage of the remaining acetate component, the residual weight percentage of the remaining alcohol component, and the residual weight percentage of the total of the remaining two components were determined. Then the respective ratios of the residual weight percentages of the remaining two components to the residual weight percentage of the total of the remaining two components, "a/c" and "b/c", and the ratio of the residual weight percentage of the remaining acetate component to the residual weight percentage of the remaining alcohol component, "a/b", were calculated. The results are shown in Table 3.

Although the residual weight percentage of the remaining acetate component and the residual weight percentage of the remaining alcohol component vary largely, the ratios "a/c" and "b/c" each falls within a range of from 0.90 to 1.05 and the ratio "a/b" falls within the range of 0.93 to 1.14, indicating that the component ratio is maintained in a long period of time.

Example 3 is an example proving that the release performance under predetermined conditions (30°C, wind velocity: 0.7 m/sec) is also displayed in the actual field.

**Table 3**

| Elapsed Days | | Day0 | Day30 | Day 60 | Day78 | Day91 | Day109 | Day122 |
|---|---|---|---|---|---|---|---|---|
| Ex.3 | Z11-16:Ac (mg) (75) | 123.2 | 108.4 | 84.0 | 71.6 | 64.8 | 54.3 | 46.1 |
| | Z11-16:OH (mg) (25) | 41.0 | 33.5 | 27.2 | 20.8 | 19.8 | 19.4 | 17.6 |
| | total of Z11-16:Ac and Z11-16:OH (mg) | 164.2 | 141.9 | 108.2 | 92.4 | 84.6 | 73.7 | 63.7 |
| | remaining Z11-16:Ac a% | 100 | 88.0 | 68.2 | 58.1 | 52.6 | 44.1 | 39.2 |
| | remaining Z11-16:OH b% | 100 | 82.1 | 58.2 | 51.2 | 48.2 | 47.1 | 37.4 |
| | remaining Z11-16:Ac and Z11-16:OH c% | 100 | 86.4 | 65.9 | 56.3 | 51.5 | 44.9 | 38.8 |
| | a/c | 1.00 | 1.02 | 1.03 | 1.03 | 1.02 | 0.98 | 1.01 |
| | b/c | 1.00 | 0.95 | 0.90 | 0.91 | 0.94 | 1.05 | 0.96 |
| | a/b | 1.00 | 1.07 | 1.14 | 1.13 | 1.08 | 0.93 | 1.05 |

| | | | | | | | | |
|---|---|---|---|---|---|---|---|---|
| Z11-16:Ac means Z-11-hexadecenyl acetate, and Z11-16:OH means Z-11-hexadecenol. | | | | | | | | |

### <Example 4>

A polymer tube was produced by carrying out condensation polymerization of adipic acid and a 60:40 (weight ratio) mixture liquid of butane diol and ethylene glycol to obtain a random copolymer; extruding the random copolymer into a long tube having an inner diameter of 0.84 mm and a wall thickness of 0.40 mm; and cutting the resulting tube into a tube having a length of 20 mm. A sustained release pheromone preparation was obtained by filling the resulting polymer tube with 8 mg of a mixture solution containing E-5-decenyl acetate and E-5-decenol at a weight ratio of 82:18 and then heat-sealing both ends of the polymer tube.

The sustained release pheromone preparation thus obtained was left to stand at a wind velocity of 0.7 m/sec and 30°C to release the solution from the preparation. With the passage of time, the respective remaining amounts of E-5-decenyl acetate and E-5-decenol in the preparation were analyzed by gas chromatography. The residual weight percentage "a" of the remaining acetate component, the residual weight percentage "b" of the remaining alcohol component, and the residual weight percentage "c" of the total of the remaining two components were determined. Then the respective ratios of the residual weight percentages of the remaining two components to the residual weight percentage of the total of the remaining two components, "a/c" and "b/c", and the ratio of the residual weight percentage of the remaining acetate component to the residual weight percentage of the remaining alcohol component, "a/b", were calculated. The results are shown in Table 4.

The results of Example 4 in which m is 4, n is 2, R¹ and R² each stands for - (CH₂)₄- and x is 0.6 in Formula (I), the ratio "a/c" changes within a range of from 1.01 to 1.03, the ratio "b/c" changes within a range of from 1.00 to 0.85, and the ratio "a/b" changes within a range of from 1.00 to 1.21, shows that the two components are released at a relatively constant ratio.

### <Comparative Example 4>

The respective residual weight percentages "a" and "b" of the remaining two components, the respective ratios of them to the residual weight percentage "c" of the total of the remaining two components, "a/c" and "b/c", and the ratio of the residual weight percentage of the remaining acetate component to the residual weight percentage of the remaining alcohol component, "a/b", were calculated in the same manner as in Example 4 except that the random copolymer in Example 4 was replaced by a random copolymer obtained by condensation polymerization of adipic acid and a 50:50 (weight ratio) mixture liquid of butane diol and ethylene glycol. The results are shown in Table 4.

The results of Comparative Example 4 in which m is 4, n is 2, R¹ and R² each stands for -(CH₂)₄- and x is 0.5 in Formula (I), the ratio "a/c" changes within a range of from 1.00 to 0.76, the ratio "b/c" changes within a range of from 1.00 to 2.07, and the ratio "a/b" changes within a range of from 1.00 to 0.37, shows that the acetate component is released in a larger amount.

**Table 4**

| Elapsed Days | | Day0 | Day7 | Day14 | Day21 | Day28 |
|---|---|---|---|---|---|---|
| Ex.4 | E5-10:Ac (mg) (82) | 6.33 | 4.70 | 3.48 | 1.63 | 0.65 |
| | E5-10:OH (mg) (18) | 1.39 | 0.97 | 0.69 | 0.30 | 0.12 |
| | total of E5-10:Ac and E5-10:OH (mg) | 7.72 | 5.67 | 4.17 | 1.93 | 0.77 |
| | remaining E5-10:Ac a% | 100 | 74.2 | 55.0 | 25.8 | 10.3 |
| | remaining E5-10:OH b% | 100 | 69.8 | 49.7 | 21.9 | 8.5 |
| | remaining E5-10:Ac and E5-10:OH c% | 100 | 73.5 | 54.0 | 25.0 | 10.0 |
| | a/c | 1.00 | 1.01 | 1.02 | 1.03 | 1.03 |
| | b/c | 1.00 | 0.95 | 0.92 | 0.88 | 0.85 |
| | a/b | 1.00 | 1.06 | 1.11 | 1.17 | 1.21 |
| Com p. Ex.4 | E5-10:Ac (mg) (82) | 6.56 | 4.34 | 3.13 | 1.86 | 1.04 |
| | E5-10:OH (mg) (18) | 1.44 | 1.18 | 1.07 | 0.80 | 0.62 |
| | total of E5-10:Ac and E5-10:OH (mg) | 8.00 | 5.52 | 4.20 | 2.66 | 1.66 |
| | remaining E5-10:Ac a% | 100 | 66.2 | 47.7 | 28.4 | 15.9 |
| | remaining E5-10:OH b% | 100 | 81.9 | 74.3 | 55.6 | 43.1 |
| | remaining E5-10:Ac and E5-10:OH c% | 100 | 69.0 | 52.5 | 33.2 | 20.8 |
| | a/c | 1.00 | 0.96 | 0.91 | 0.86 | 0.76 |
| | b/c | 1.00 | 1.19 | 1.41 | 1.67 | 2.07 |
| | a/b | 1.00 | 0.81 | 0.65 | 0.51 | 0.37 |

| | | | | | | |
|---|---|---|---|---|---|---|
| E5-10:Ac means E-5-decenyl acetate, and E5-10:OH means E-5-decenol. | | | | | | |

### <Example 5>

A polymer tube was produced by extruding a polymer blend obtained by blending a 20:80 (mole ratio) copolymer of butylene adipate and butylene succinate ("Bionolle #3001", product of Showa Denko) with a 94:6 (mole ratio) copolymer of 3-hydroxyvaleric acid and 3-hydroxycaproic acid ("AONILEX X131A", product of Kaneka Corporation) at 90:10 (weight ratio) into a long tube having an inner diameter of 0.8 mm and a wall thickness of 0.40 mm, and then cutting it into a tube having a length of 200-mm. A sustained release pheromone preparation was obtained by filling the resulting polymer tube with 90 mg of a mixture solution containing E-5-decenyl acetate and E-5-decenol at a weight ratio of 50:50 and heat-sealing both ends of the polymer tube.

The resulting sustained release pheromone preparation was left to stand at a wind velocity of 0.7 m/sec and 30°C to release the solution from the preparation. With the passage of time, the respective remaining amounts of E-5-decenyl acetate and E-5-decenol in the preparation were analyzed by gas chromatography. The residual weight percentage "a" of the remaining acetate component, the residual weight percentage "b" of the remaining alcohol component, and the residual weight percentage "c" of the total of the remaining two components were determined. Then the respective ratios of the residual weight percentages of the remaining two components to the residual weight percentage of the total of the remaining two components, "a/c" and "b/c", and the ratio of the residual weight percentage of the remaining acetate component to the residual weight percentage of the remaining alcohol component, "a/b", were calculated. The results are shown in Table 5.

The ratio "a/c" changes within a range of from 1.00 to 0.98, the ratio "b/c" changes within a range of from 1.00 to 1.02, and the ratio "a/b" changes within a range of 1.00 to 0.96, indicating release of the components at the constant component ratio.

### <Example 6>

The respective residual weight percentages of the remaining two components, the respective ratios of them to the residual weight percentage of the total of the remaining two components, "a/c" and "b/c", and the ratio of the residual weight percentage of the remaining acetate component to the residual weight percentage of the remaining alcohol component, "a/b", were calculated in the same manner as in Example 5 except that the weight ratio of the copolymers blended in Example 5 was changed from 90:10 to 80:20. The results are shown in Table 5.

Example 6 is an example in which a polymer blend of the polyester (80 parts by weight) corresponding to Formula (I) and the biodegradable polyester (20 parts by weight) is used. It is evident from the results that the acetate component and the alcohol component are released at a constant ratio.

### Comparative example 7

The respective residual weight percentages of the remaining two components, the respective ratios of them to the residual weight percentage of the total of the remaining two components, "a/c" and "b/c", and the ratio of the residual weight percentage of the remaining acetate component to the residual weight percentage of the remaining alcohol component, "a/b", were calculated in the same manner as in Example 5 except that the weight ratio of the copolymers blended in Example 5 was changed from 90:10 to 70:30. The results are shown in Table 5.

Comparative example 7 is an example in which a polymer blend of the polyester (70 parts by weight) corresponding to Formula (I) and the biodegradable polyester (30 parts by weight). It is evident from the results that the acetate component and the alcohol component are released at a constant ratio.

### <Comparative Example 5>

The respective residual weight percentages of the remaining two components, the respective ratios of them to the residual weight percentage of the total of the remaining two components, "a/c" and "b/c", and the ratio of the residual weight percentage of the remaining acetate component to the residual weight percentage of the remaining alcohol component, "a/b", were calculated in the same manner as in Example 5 except that the weight ratio of the copolymers blended in Example 5 was changed from 90:10 to 50:50. The results are shown in Table 5.

Comparative Example 5 is an example in which a polymer blend of the polyester (50 parts by weight) corresponding to Formula (I) and the biodegradable polyester (50 parts by weight). It is evident from the results that when the number of parts by weight of the polyester corresponding to Formula (I) is decreased, release of the acetate component and the alcohol component becomes different, which is away from ideal release at the constant component ratio.

**Table 5**

| Elapsed Days | | Day0 | Day24 | Day70 |
|---|---|---|---|---|
| Ex.5 | E5-10:Ac (mg) (50) | 44.8 | 24.4 | 11.9 |
| | E5-10:OH (mg) (50) | 43.6 | 24.8 | 12.1 |
| | total of E5-10:Ac and E5-10:OH (mg) | 88.4 | 49.2 | 24.0 |
| | remaining E5-10:Ac a% | 100 | 54.5 | 26.6 |
| | remaining E5-10:OH b% | 100 | 56.9 | 27.8 |
| | remaining E5-10:Ac and E5-10:OH c% | 100 | 55.7 | 27.2 |
| | a/c | 1.00 | 0.98 | 0.98 |
| | b/c | 1.00 | 1.02 | 1.02 |
| | a/b | 1.00 | 0.96 | 0.96 |
| Ex.6 | E5-10:Ac (mg) (50) | 44.0 | 27.5 | 14.3 |
| | E5-10:OH (mg) (50) | 43.0 | 28.1 | 15.0 |
| | total of E5-10:Ac and E5-10:OH (mg) | 87.0 | 55.6 | 29.3 |
| | remaining E5-10:Ac a% | 100 | 62.5 | 32.5 |
| | remaining E5-10:OH b% | 100 | 65.3 | 34.9 |
| | remaining E5-10:Ac and E5-10:OH c% | 100 | 63.9 | 33.7 |
| | a/c | 1.00 | 0.98 | 0.96 |
| | b/c | 1.00 | 1.02 | 1.04 |
| | a/b | 1.00 | 0.96 | 0.92 |
| Ex.7 | E5-10:Ac (mg) (50) | 45.3 | 27.8 | 16.8 |
| | E5-10:OH (mg) (50) | 43.9 | 28.4 | 17.7 |
| | total of E5-10:Ac and E5-10:OH (mg) | 89.2 | 56.2 | 34.5 |
| | remaining E5-10:Ac a% | 100 | 61.4 | 37.1 |
| | remaining E5-10:OH b% | 100 | 64.7 | 40.3 |
| | remaining E5-10:Ac and E5-10:OH c% | 100 | 63.0 | 38.7 |
| | a/c | 1.00 | 0.97 | 0.95 |
| | b/c | 1.00 | 1.03 | 1.04 |
| | a/b | 1.00 | 0.94 | 0.91 |
| Com p. Ex.5 | E5-10:Ac (mg) (50) | 45.0 | 26.9 | 15.3 |
| | E5-10:OH (mg) (50) | 43.7 | 61.6 | 22.9 |
| | total of E5-10:Ac and 5-10:OH (mg) | 88.7 | 58.5 | 38.2 |
| | remaining E5-10:Ac a% | 100 | 60.0 | 34.0 |
| | remaining E5-10:OH b% | 100 | 72.3 | 52.4 |
| | remaining E5-10:Ac and E5-10:OH c% | 100 | 66.0 | 43.1 |
| | a/c | 1.00 | 0.91 | 0.79 |
| | b/c | 1.00 | 1.10 | 1.22 |
| | a/b | 1.00 | 0.83 | 0.65 |

### Comparative example 8

A polymer tube was produced by extruding a polymer blend obtained by blending a 20:80 (mole ratio) copolymer of butylene adipate and butylene succinate ("Bionolle #3001", product of Showa Denko) and poly-ε-caprolactone ("CAPA6800", product of Perstorp) at a weight ratio of 65:35 into a long tube having an inner diameter of 0.6 mm and a wall thickness of 0.30 mm and cutting the long tube into a tube having a length of 200 mm. A sustained release pheromone preparation was obtained by filling the resulting polymer tube with 50 mg of a mixture solution (sex pheromone composition of Toleria romanovi) of (Z,Z)-3,13-octadecadienyl acetate and (Z,Z)-3,13-octadecadienol at a weight ratio of 10:90 and heat-sealing both ends of the polymer tube.

The resulting sustained release pheromone preparation was left to stand at a wind velocity of 0.7 m/sec and 40°C to release the solution from the preparation. With the passage of time, the respective remaining amounts of (Z,Z)-3,13-octadecadienyl acetate and (Z,Z)-3,13-octadecadienol in the preparation were analyzed by gas chromatography. The residual weight percentage "a" of the remaining acetate component, the residual weight percentage "b" of the remaining alcohol component, and the residual weight percentage "c" of the total of the remaining two components were determined. Then the ratios of the residual weight percentages of the remaining two components to the residual weight percentage of the remaining two components, "a/c" and "b/c", and the ratio of the residual weight percentage of the remaining acetate component to the residual weight percentage of the remaining alcohol component, "a/b", were calculated. The results are shown in Table 6.

It is evident from the results that even when the preparation contains a higher content of the alcohol component, such as the preparation containing 10 parts by weight of the acetate component and 90 parts by weight of the alcohol component, the preparation has such a release characteristic as to keep the ratio between the acetate component and the alcohol component constant in the mixture solution remaining in the preparation.

### <Comparative Example 6>

The respective residual weight percentages of the remaining two components, the respective ratios of them to the residual weight percentage of the total of the remaining two components, "a/c" and "b/c", and the ratio of the residual weight percentage of the remaining acetate component to the residual weight percentage of the remaining alcohol component, "a/b", were calculated in the same manner as in Example 8 except that the polymer blend in Example 8 was replaced by an ethylene-vinyl acetate copolymer having a vinyl acetate content of 4% by weight. The results are shown in Table 6.

When the ethylene-vinyl acetate copolymer having a vinyl acetate content of 4 weight% is used, the ratio "a/c" falls within a range of 1.00 to 0.10, the ratio "b/c" falls within a range of from 1.00 to 1.10, and the ratio "a/b" falls within a range of from 1.00 to 0.09, indicating that only the acetate component is released first and a ratio of the acetate component in the mixture solution remaining in the preparation lowers markedly.

**Table 6**

| Elapsed Days | | Day0 | Day25 | Day50 | Day80 | Day110 | Day150 |
|---|---|---|---|---|---|---|---|
| Ex.8 | Z3Z13-18:Ac (mg) (10) | 4.97 | 4.10 | 3.30 | 2.59 | 2.06 | 1.59 |
| | Z3Z13-18:OH (mg) (90) | 44.7 | 36.1 | 28.7 | 21.9 | 17.0 | 13.1 |
| | total of Z3Z13-18:Ac and Z3Z13-18:OH (mg) | 49.7 | 40.2 | 32.0 | 24.5 | 19.1 | 14.7 |
| | remaining Z3Z13-18:Ac a% | 100 | 82.5 | 66.3 | 52.3 | 41.4 | 32.0 |
| | remaining Z3Z13-18:OH b% | 100 | 80.8 | 64.2 | 49.0 | 38.0 | 29.3 |
| | total of Z3Z13-18:Ac and Z3Z13-18:OH c% | 100 | 80.9 | 64.4 | 49.3 | 38.4 | 29.5 |
| | a/c | 1.00 | 1.02 | 1.03 | 1.06 | 1.08 | 1.08 |
| | b/c | 1.00 | 1.00 | 1.00 | 0.99 | 0.99 | 0.99 |
| | a/b | 1.00 | 1.02 | 1.03 | 1.07 | 1.09 | 1.09 |
| Com p. Ex.6 | Z3Z13-18:Ac (mg) (10) | 5.12 | 2.60 | 1.2 | 0.6 | 0.3 | 0.2 |
| | Z3Z13-18:OH (mg) (90) | 46.1 | 39.9 | 33.6 | 27.6 | 22.7 | 19.3 |
| | total of Z3Z13-18:Ac and Z3Z13-18:OH (mg) | 51.2 | 42.5 | 34.8 | 28.2 | 23.0 | 19.5 |
| | remaining Z3Z13-18:Ac a% | 100 | 50.8 | 23.4 | 11.7 | 5.9 | 3.9 |
| | remaining Z3Z13-18:OH b% | 100 | 86.5 | 72.9 | 59.9 | 49.2 | 41.9 |
| | remaining Z3Z13-18:Ac and Z3Z13-18:OH c% | 100 | 83.0 | 67.9 | 55.1 | 44.9 | 38.1 |
| | a/c | 1.00 | 0.61 | 0.34 | 0.21 | 0.13 | 0.10 |
| | b/c | 1.00 | 1.04 | 1.07 | 1.08 | 1.10 | 1.10 |
| | a/b | 1.00 | 0.59 | 0.32 | 0.19 | 0.12 | 0.09 |

| | | | | | | | |
|---|---|---|---|---|---|---|---|
| Z3Z13-18:Ac means (Z,Z)-3,13-octadecadienyl acetate, and Z3Z13-18:OH means (Z,Z)-3,13-octadecadienol. | | | | | | | |

### <Example 9>

A polymer tube was produced by extruding a polymer blend obtained by blending a 95:5 (mole ratio) copolymer of butylene adipate and butylene terephthalate with poly-ε-caprolactone ("CAPA6800", product of Perstorp) at a weight ratio of 90:10 into a long tube having an inner diameter of 1.07 mm and a wall thickness of 0.40 mm and cutting the long tube into a tube having a length of 200 mm. A sustained release pheromone preparation was obtained by filling the resulting polymer tube with 150 mg of a mixture solution (sex pheromone composition of pink borer) of Z-11-hexadecenyl acetate and Z-11-hexadecenol at a weight ratio of 75:25 and heat-sealing both ends of the polymer tube.

The resulting sustained release pheromone preparation was left to stand at a wind velocity of 0.7 m/sec and 30°C to release the solution from the preparation. With the passage of time, the respective remaining amounts of Z-11-hexadecenyl acetate and Z-11-hexadecenol in the preparation were analyzed by gas chromatography. The residual weight percentage "a" of the remaining acetate component, the residual weight percentage "b" of the remaining alcohol component, and the residual weight percentage "c" of the total of the remaining two components were determined. Then the respective ratios of the residual weight percentages of the remaining two components to the residual weight percentage of the total of the remaining two components, "a/c" and "b/c", and the ratio of the residual weight percentage of the remaining acetate component to the residual weight percentage of the remaining alcohol component, "a/b", were calculated. The results are shown in Table 7.

It is evident from the results that even when the preparation contains a higher content of the acetate component, such as the preparation containing 75 parts by weight of the acetate component and 25 parts by weight of the alcohol component, the preparation has such a release characteristic as to keep the ratio between the acetate component and the alcohol component constant in the mixture solution remaining in the preparation.

**Table 7**

| Elapsed Days | | Day0 | Day20 | Day60 | Day115 | Day160 |
|---|---|---|---|---|---|---|
| Ex.9 | Z11-16:Ac (mg) (75) | 119.9 | 101.2 | 79.8 | 54.8 | 34.3 |
| | Z11-16:OH (mg) (25) | 41.2 | 34.9 | 27.9 | 20.8 | 14.0 |
| | total of Z11-16:Ac and Z11-16:OH (mg) | 161.1 | 136.1 | 107.7 | 75.6 | 48.3 |
| | remaining Z11-16:Ac a% | 100 | 84.4 | 66.7 | 45.7 | 28.6 |
| | remaining Z11-16:OH b% | 100 | 84.7 | 67.6 | 50.6 | 33.9 |
| | remaining Z11-16:Ac and Z11-16:OH c% | 100 | 84.5 | 66.9 | 46.9 | 30.0 |
| | a/c | 1.00 | 1.00 | 1.00 | 0.97 | 0.95 |
| | b/c | 1.00 | 1.00 | 1.01 | 1.08 | 1.13 |
| | a/b | 1.00 | 1.00 | 0.99 | 0.90 | 0.84 |

| | | | | | | |
|---|---|---|---|---|---|---|
| Z11-16:Ac means Z-11-hexadecenyl acetate, and Z11-16:OH means Z-11-hexadecenol. | | | | | | |

## Claims

1. A sustained release pheromone preparation for controlling a pest insect comprising a solution of the sex pheromone thereof consisting of a mixture of an unsaturated aliphatic alcohol compound and its acetate compound, the unsaturated aliphatic acetate compound and the unsaturated aliphatic alcohol compound in a weight ratio of from 10:90 to 99.5:0.5, and
a container for enclosing the mixture solution, the container comprising, as at least a part of the container, a membrane of a polyester corresponding to Formula (I) or a polyester copolymer corresponding to formula (I): 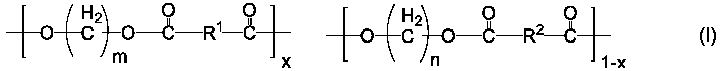
wherein R¹ and R² may be the same or different and each stands for a divalent hydrocarbon group having from 1 to 20 carbon atoms, m is an integer of 4 or more, n is 2 or 3, and x is the number of from 0.6 to 1.0,
or a polymer blend of the polyester or the copolymer with a biodegradable polyester, in which blend the biodegradable polyester is present in an amount of up to 40 parts by weight relative to 100 parts by weight of the polyester or copolymer,
wherein the preparation has a property that a ratio of a residual weight percentage of the remaining unsaturated aliphatic acetate compound to a residual weight percentage of a total of the remaining unsaturated aliphatic acetate and unsaturated aliphatic alcohol compounds, and a ratio of a residual weight percentage of the remaining unsaturated aliphatic alcohol compound to the residual weight percentage of the total of the remaining unsaturated aliphatic acetate and unsaturated aliphatic alcohol compounds fall each within a range of from 0.80 to 1.20, throughout an effective action period of the sustained release pheromone preparation, wherein the biodegradable polyester is selected from the group consisting of polycaprolactone, poly(3-hydroxybutyric acid), poly(3-hydroxyvaleric acid), poly(3-hydroxycaproic acid), and copolymers thereof,
wherein the residual weight percentage means the percentage corresponding to the ratio of the remaining weight to the initial weight of the compound, and the effective action period means the period during which the residual weight percentage changes from 90% to 40%.

2. The sustained release pheromone preparation according to Claim 1, wherein the biodegradable polyester is present in an amount of from 5 to 40 parts by weight relative to 100 parts by weight of the polyester or copolymer.

3. A method for controlling a pest insect, comprising a step of placing the sustained release pheromone preparation claimed Claim 1 or 2 in a field, wherein the pest insect is selected from the group consisting of an oriental fruit moth (Grapholita molesta), a pink borer (Sesamia inferens), Toleria romanovi, and a peach twig borer (Anarsia lineatella).

## Patentansprüche

1. Ein Pheromonpräparat mit verlängerter Freisetzung zur Bekämpfung eines Schadinsekts, umfassend eine Lösung des Sexualpheromons davon, bestehend aus einem Gemisch einer ungesättigten aliphatischen Alkoholverbindung und ihrer Acetatverbindung, wobei die ungesättigte aliphatische Acetatverbindung und die ungesättigte aliphatische Alkoholverbindung in einem Gewichtsverhältnis von 10:90 bis 99,5:0,5 vorhanden sind, und
einen Behälter zum Einschließen der Gemischlösung, wobei der Behälter als mindestens einen Teil des Behälters eine Membran aus einem Polyester der Formel (I) oder einem Polyester-Copolymer der Formel (I) umfasst: 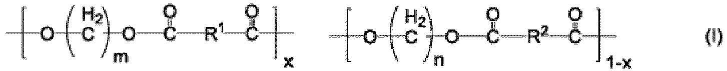 wobei R¹ und R² gleich oder verschieden sein können und jedes für eine zweiwertige Kohlenwasserstoffgruppe mit 1 bis 20 Kohlenstoffatomen steht, m eine ganze Zahl von 4 oder mehr ist, n gleich 2 oder 3 ist und x die Zahl von 0,6 bis 1,0 ist,
oder einen Polymer-Blend des Polyesters oder des Copolymers mit einem biologisch abbaubaren Polyester, wobei der biologisch abbaubare Polyester in dem Blend in einer Menge von bis zu 40 Gewichtsteilen, bezogen auf 100 Gewichtsteile des Polyesters oder Copolymers, vorhanden ist,
wobei das Präparat eine Eigenschaft aufweist, dass ein Verhältnis eines Restgewichtsprozentsatzes der verbleibenden ungesättigten aliphatischen Acetatverbindung zu einem Restgewichtsprozentsatz einer Gesamtheit der verbleibenden ungesättigten aliphatischen Acetat- und ungesättigten aliphatischen Alkoholverbindungen, und ein Verhältnis eines Restgewichtsprozentsatzes der verbleibenden ungesättigten aliphatischen Alkoholverbindung zu dem Restgewichtsprozentsatz der Gesamtheit der verbleibenden ungesättigten aliphatischen Acetat- und ungesättigten aliphatischen Alkoholverbindungen jeweils in einen Bereich von 0,80 bis 1,20 liegen, während der ganzen effektiven Wirkungsdauer des Pheromonpräparats mit verlängerter Freisetzung, wobei der biologisch abbaubare Polyester ausgewählt ist aus der Gruppe bestehend aus Polycaprolacton, Poly(3-hydroxybuttersäure), Poly(3-hydroxyvaleriansäure), Poly(3-hydroxycapronsäure) und Copolymeren davon,
wobei der Restgewichtsprozentsatz der Prozentsatz ist, der dem Verhältnis des verbleibenden Gewichts zum Ausgangsgewicht der Verbindung entspricht,
und die effektive Wirkungsdauer die Zeitspanne ist, in der sich der Restgewichtsprozentsatz von 90 % auf 40 % ändert.

2. Das Pheromonpräparat mit verlängerter Freisetzung nach Anspruch 1, wobei der biologisch abbaubare Polyester in einer Menge von 5 bis 40 Gewichtsteilen, bezogen auf 100 Gewichtsteile des Polyesters oder Copolymers, vorhanden ist.

3. Ein Verfahren zur Bekämpfung eines Schadinsekts, umfassend einen Schritt des Platzierens des in Anspruch 1 oder 2 beanspruchten Pheromonpräparats mit verlängerter Freisetzung in einem Feld, wobei das Schadinsekt ausgewählt ist aus der Gruppe bestehend aus einem Pfirsichwickler (Grapholita molesta), einem rosa Stängelbohrer (Sesamia inferens), Toleria romanovi und einer Pfirsichmotte (Anarsia lineatella).

## Revendications

1. Préparation de phéromone à libération prolongée destinée à lutter contre un insecte nuisible, comprenant une solution de la phéromone sexuelle de celui-ci consistant en un mélange d'un composé alcool aliphatique insaturé et de son composé acétate, le composé acétate aliphatique insaturé et le composé alcool aliphatique insaturé dans un rapport pondéral de 10:90 à 99,5:0,5, et
un contenant destiné à renfermer la solution en mélange, le contenant comprenant, en tant qu'au moins une partie du contenant, une membrane d'un polyester correspondant à la formule (I) ou d'un copolymère de polyester correspondant à la formule (I) : 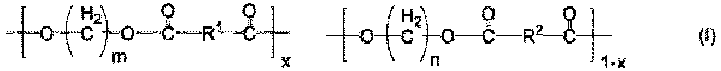
dans laquelle R¹ et R² peuvent être identiques ou différents et chacun représente un groupe hydrocarbure divalent comportant de 1 à 20 atomes de carbone, m est un entier de 4 ou plus, n vaut 2 ou 3, et x est le nombre de 0,6 à 1,0,
ou un mélange de polymères du polyester ou du copolymère avec un polyester biodégradable, mélange dans lequel le polyester biodégradable est présent dans une quantité allant jusqu'à 40 parties en poids pour 100 parties en poids du polyester ou copolymère,
dans laquelle la préparation a une propriété selon laquelle un rapport d'un pourcentage pondéral résiduel du composé acétate aliphatique insaturé restant sur un pourcentage pondéral résiduel d'un total des composés acétate aliphatique insaturé et alcool aliphatique insaturé restants, et un rapport d'un pourcentage pondéral résiduel du composé alcool aliphatique insaturé restant sur le pourcentage pondéral résiduel du total des composés acétate aliphatique insaturé et alcool aliphatique insaturé restants entrent chacun dans une plage de 0,80 à 1,20, pendant toute une période d'action efficace de la préparation de phéromone à libération prolongée, dans laquelle le polyester biodégradable est choisi dans le groupe consistant en polycaprolactone, poly(acide 3-hydroxybutyrique), poly(acide 3-hydroxyvalérique), poly(acide 3-hydroxycaproïque), et leurs copolymères,
dans laquelle le pourcentage pondéral résiduel signifie le pourcentage correspondant au rapport du poids restant sur le poids initial du composé, et la période d'action efficace signifie la période pendant laquelle le pourcentage pondéral résiduel passe de 90 % à 40%.

2. Préparation de phéromone à libération prolongée selon la revendication 1, dans laquelle le polyester biodégradable est présent dans une quantité de 5 à 40 parties en poids pour 100 parties en poids du polyester ou copolymère.

3. Procédé de lutte contre un insecte nuisible, comprenant une étape de placement de la préparation de phéromone à libération prolongée revendiquée dans la revendication 1 ou 2 dans un champ, dans lequel l'insecte nuisible est choisi dans le groupe consistant en une tordeuse orientale du pêcher (Grapholita molesta), une noctuelle du riz (Sesamia inferens), Toleria romanovi, et un nodulier du pin rigide (Anarsia lineatella).
